(19) Europäisches Patentamt
European Patent Office
Office européen des brevets

(11) **EP 3 123 393 B1**

(12) **EUROPÄISCHE PATENTSCHRIFT**

(45) Veröffentlichungstag und Bekanntmachung des Hinweises auf die Patenterteilung:
**20.04.2022 Patentblatt 2022/16**

(21) Anmeldenummer: **15715669.6**

(22) Anmeldetag: **27.03.2015**

(51) Internationale Patentklassifikation (IPC):
**G06K 9/00** (2022.01)　　**G06K 9/32** (2006.01)

(52) Gemeinsame Patentklassifikation (CPC):
**G06V 20/20; G06V 20/63;** G06V 30/10;
G06V 2201/02

(86) Internationale Anmeldenummer:
**PCT/AT2015/050080**

(87) Internationale Veröffentlichungsnummer:
**WO 2015/143471 (01.10.2015 Gazette 2015/39)**

(54) **VERFAHREN ZUR OPTISCHEN ERKENNUNG VON ZEICHEN**

METHOD FOR THE OPTICAL DETECTION OF SYMBOLS

PROCÉDÉ DE RECONNAISSANCE OPTIQUE DE CARACTÈRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2014 AT 502242014**

(43) Veröffentlichungstag der Anmeldung:
**01.02.2017 Patentblatt 2017/05**

(73) Patentinhaber: **Anyline GmbH**
**1020 Vienna (AT)**

(72) Erfinder: **ALBERTINI, Daniel**
**1150 Wien (AT)**

(74) Vertreter: **SONN Patentanwälte OG**
**Riemergasse 14**
**1010 Wien (AT)**

(56) Entgegenhaltungen:
**US-A1- 2012 092 329　　US-A1- 2013 265 232**
**US-A1- 2014 064 559**

- Xian Li ET AL: "LCD/LED DIGIT RECOGNITION BY IPHONE", M.Sc. Thesis, 31. Mai 2011 (2011-05-31), Seiten 1-33, XP055199577, Gefunden im Internet: URL:http://repositories.tdl.org/ttu-ir/bit stream/handle/2346/ETD-TTU-2011-05-1485/LI -THESIS.pdf?sequence=1&isAllowed=y [gefunden am 2015-07-01]

- Joao Paolo Lima ET AL: "Real-Time Pattern Recognition using the OpenCV Library", Symposium on Virtual and Augmented Reality, 1. Juni 2007 (2007-06-01), Seiten 1-42, XP055199497, Gefunden im Internet: URL:http://www.researchgate.net/profile/Th iago_Farias/publication/265311134_REAL-TIM E_PATTERN_RECOGNITION_USING_THE_OPE NCV_LIB RARY/links/54c8fbf70cf289f0ced13b28.pdf [gefunden am 2015-07-01]

- YIBO LI ET AL: "Automatic Recognition System for Numeric Characters on Ammeter Dial Plate", YOUNG COMPUTER SCIENTISTS, 2008. ICYCS 2008. THE 9TH INTERNATIONAL CONFERENCE FOR, IEEE, PISCATAWAY, NJ, USA, 18. November 2008 (2008-11-18), Seiten 913-918, XP031373293, ISBN: 978-0-7695-3398-8

- JAEYOUNG KIM ET AL: "Implementation of image processing and augmented reality programs for smart mobile device", PROCEEDINGS OF 2011 6TH INTERNATIONAL FORUM ON STRATEGIC TECHNOLOGY, 1. August 2011 (2011-08-01), Seiten 1070-1073, XP055173571, DOI: 10.1109/IFOST.2011.6021205 ISBN: 978-1-45-770398-0

EP 3 123 393 B1

- **MARC PETTER ET AL: "Automatic text detection for mobile augmented reality translation", COMPUTER VISION WORKSHOPS (ICCV WORKSHOPS), 2011 IEEE INTERNATIONAL CONFERENCE ON, IEEE, 6. November 2011 (2011-11-06), Seiten 48-55, XP032095218, DOI: 10.1109/ICCVW.2011.6130221 ISBN: 978-1-4673-0062-9**

**Beschreibung**

Die Erfindung betrifft eine Verfahren zur optischen Erkennung von auf einem Display angezeigten Zeichen, wobei unter optischer Fokussierung auf Objekte in einem Abstand von maximal 1 Meter Bilddaten gewonnen werden, welche eine Repräsentation des Displays enthalten, sowie ein mobiles Endgerät mit einem Bildsensor zur Aufnahme der Bilddaten und mit einem Prozessor und einem Speicher, eingerichtet zur Durchführung des erfindungsgemäßen Verfahrens.

Eine automatische Erkennung und Verarbeitung von auf einem Display angezeigten Zeichen kann in verschiedenartigsten Anwendungen nutzbringend eingesetzt werden. Ganz allgemein bietet eine solche optische Erkennung eine einfache und seitens der Informationsquelle (d.h. jenes Geräts, dessen Display abgelesen wird) kostengünstige Möglichkeit zur kabellosen Datenübertragung zwischen zwei Geräten. Dies gilt insbesondere für Anwendungen, bei denen ein Ablesen von Daten durch einen Benutzer möglich sein soll und daher jedenfalls ein Display zur Anzeige dieser Daten vorhanden ist. In solchen Fällen könnte selbstverständlich eine separate Datenübertragung per Funk vorgesehen werden, was jedoch wegen der notwendigen Übertragungseinrichtungen mit zusätzlichen Kosten verbunden wäre. Typische Beispiele für derartige Anwendungen sind Messgeräte jeder Art, insbesondere relativ einfache und kostengünstige Messgeräte, die aus Kostengründen gewöhnlich ohne kabellose Datenübertragungsschnittstellen hergestellt werden, wie z.B. Blutzuckermessgeräte.

Aus http://www.instructables.com/id/How-to-interface-digitaldisplays-with-your-PC/?lang=de&ALLSTEPS) ist ein Verfahren zum Ablesen eines digitalen Displays bekannt, wenn keine PC-Schnittstelle vorhanden ist. Es wird ein adaptives Schwellwertverfahren zur Vorverarbeitung der Bilddaten eingesetzt. Weiters wird die Ausnutzung des Displayrahmens als Filtercharakteristik für einen Blob-Filter beschrieben, mit dem jene Blobs, welche ihrerseits von einem Blob umgeben sind, identifiziert werden können. Die Zeichenerkennung erfolgt durch Vergleich mit einer Tabelle an bekannten Formen In der Webseite http://www.netzwelt.de/news/86016-handy-alltag-besten-scanner-apps-ueberblick.html) werden einzelne Features vorgestellt, jedoch nicht deren Implementierung. Die angedeuteten Features sind, dass ein Handy Fotos so drehen kann, dass es aussieht, als wäre das Handy exakt im richtige Winkel zum Papier positioniert. Eine automatische Erkennung der Ränder des Bildinhalts und - wenn auch in anderem Zusammenhang - die Anwendung von OCR auf Visitenkarten sind hier angesprochen.

Grundsätzlich verwandte Verfahren sind weiters bereits im Zusammenhang mit einem automatischen Ablesen von Zählerständen vorgeschlagen worden. Beispielsweise offenbart die DE 10 2011 000 516 A1 eine Erfassungseinrichtung, welche eine numerische mechanische oder digitale Anzeige eines Messgeräts, insbesondere eines Strom-, Wasser-, Gas- oder Wärmezählers, optoelektronisch erfasst und durch Schrifterkennung in eine Zeichencodierung (ASCII-Code) umwandelt. Die Erfassungseinrichtung ist dabei parallel zum Messgerät und direkt über dessen Anzeige ausgerichtet und mit dem Messgerät verbunden, so dass vor der Schrifterkennung allenfalls noch die Orientierung der erfassten Bilddaten durch eine Drehung um einen voreingestellten Drehwinkel korrigiert werden muss.

Weiters zeigt die DE 10 2012 110 273 A1 ein Untersuchungssystem zur Überwachung und Diagnose von Maschinen, wobei die Werte verschiedener Betriebsparameter der Maschine aus visuellen Anzeigeeinrichtungen, beispielsweise aus einer digitalen Anzeigeeinrichtung mit einer numerischen Ausgabe, erfasst werden. Anschließend kann mittels eines nicht näher beschriebenen Zeichenerkennungs-Verfahrens ein Messwert in den so aufgenommenen Bilddaten identifiziert, in maschinenkodierten Text übersetzt und an eine Datenermittlungsvorrichtung übermittelt werden.

Bei diesen bekannten Verfahren werden demzufolge die angezeigten Daten mittels Zeichenerkennung direkt in den aufgenommenen Bilddaten erkannt und ausgelesen. Dies setzt voraus, dass die Bilddaten in einer geeigneten Form aufgenommen werden können. Bei den oben beschriebenen Vorrichtungen ist diese Voraussetzung dadurch erfüllt, dass die jeweiligen Bildsensoren speziell für diese Aufgabe vorgesehen und vor den Anzeigen bzw. Displays fest eingerichtet sind. Dementsprechend ist das aufgenommene Bild bzw. sind die gewonnenen Bilddaten eine grafische Entsprechung der Anzeigefläche des jeweiligen Displays. Für Anwendungen, bei denen das Display beispielsweise mit einer in einem mobilen Endgerät integrierten Kamera aufgenommen wird, wobei das Endgerät vom Benutzer in der Hand gehalten wird und das Display im Allgemeinen nur einen relativ kleinen Teil der den gewonnenen Bilddaten entsprechenden Bildfläche einnimmt, treten mehrere Probleme auf, die die bekannten Verfahren für solche Situationen unpraktikabel bzw. ungeeignet machen: da ein großer Teil der Bilddaten keine Information über das Display enthält, ist eine Zeichenerkennung - welche naturgemäß ein relativ aufwendiges Verfahren ist - direkt in den gewonnenen Bilddaten unverhältnismäßig aufwendig; zudem können die Helligkeits- und Kontrastverhältnisse zwischen dem Display und der ebenfalls aufgenommenen Umgebung stark variieren, was den Kontrast der Abbildung des Displays häufig so stark verschlechtert, dass jede Zeichenerkennung fehlschlägt; dieses Problem wird durch ungünstige Lichtverhältnisse und Schatten sowie Reflexionen am Display noch verstärkt; und schließlich kann es bei der Abbildung des Displays aufgrund einer ungenauen Ausrichtung zu Verzerrungen kommen, welche eine Erkennung der somit ebenfalls verzerrten Zeichen unmöglich macht.

Die Masterarbeit "LCD/LED DIGIT RECOGNITION BY IPHONE" von Xian Li et al vom 31. Mai 2011 betrifft die Zeichenerkennung einer LCD oder LED-Anzeige mittels iPhone unter Zuhilfenahme von Funktionen der Programmbibliotheken "OpenCV" und "Tesseract OCR". Dabei wird zunächst versucht, mittels Kantenerkennung (Canny edge detection mittels der Funktion "cvCanny") die Anzeige innerhalb eines aufgenommenen Bildes zu erkennen. Als Input wird dabei ein Graustufen-Bild verwendet, wobei das eingesetzte Kantenerkennungsverfahren nach lokalen Maxima des Farbgradienten sucht bzw. diese zu Kanten verbindet. Auf Basis der ermittelten Kanten werden Umrisse (mittels "cv-FindContours") rekonstruiert und aus den erkannten Umrissen wird anschließend jener Umriss ausgewählt, welcher selbst mindestens fünf Umrisse enthält und dessen Flächeninhalt innerhalb eines vorgegebenen Bereichs liegt.

Einen allgemeinen Überblick über eine Vielzahl von Funktionen der OpenCV-Bibliothek bietet der Artikel "Real-Time Pattern Recognition using the Opentv Library" von Joao Paolo Lima et al (Symposium on Virtual and Augmented Reality, 1. Juni 2007, Seiten 1-42).

Der Artikel "Automatic Recognition System for Numeric Characters on Ammeter Dial Plate" von Yibo Li et al. (YOUNG COMPUTER SCIENTISTS, 2008. ICYCS 2008. THE 9TH INTERNATIONAL CONFERENCE FOR, IEEE, PISCATANAY, NJ, USA, 18. November 2008, Seiten 913-918) beschreibt ein Verfahren zur automatischen Auslese eines Stromzählers.

Die US 2014/064559 A1 betrifft ein Warenerkennungsverfahren und einen entsprechenden Apparat.

Eine bevorzugte Anwendung der Erfindung ist das Aufnehmen, Erkennen und Weiterverarbeiten von Blutzucker-Messwerten von einem Blutzuckermessgerät. Zu diesem Zweck werden bisher - abgesehen von einer manuellen Übertragung der angezeigten Daten - mitunter kabelbasierte Lösungen vermarktet und eingesetzt. Es existiert auch ein spezielles Anzeigegerät, welches per Kabel mit dem Blutzuckermessgerät verbunden wird und die zu übertragenden Daten in einem maschinenlesbaren Format, nämlich als QR-Code, anzeigt. Der QR-Code ist im Vergleich zu von Menschen lesbaren Zeichen elektronisch signifikant leichter zu erkennen, da er zu diesem Zweck spezielle Erkennungsmerkmale aufweist, welche auch eine eindeutige Ausrichtung und Entzerrung des Codes erlauben. Zudem enthält ein QR-Code üblicherweise redundante Information, so dass einige schlecht oder nicht auslesbare Teilbereiche die Auslesbarkeit des Codes als Ganzes nicht beeinträchtigen. Eine vollständig kabellose Datenübertragung ist nur bei den teuersten Messgeräten möglich, welche z.B. eine Bluetooth-Schnittstelle zur Datenübertragung anbieten. Die überwiegende Mehrzahl der Blutzuckermessgeräte besitzt jedoch keine derartige Schnittstelle.

Demnach ist es Aufgabe der Erfindung, ein Verfahren der eingangs angeführten Art zu schaffen, welches eine zuverlässige Zeichenerkennung auch unter den oben geschilderten widrigen Umständen ermöglicht. Dabei soll das Verfahren auf einem mobilen Endgerät implementierbar sein und eine effiziente und rasche lokale Verarbeitung der Bilddaten auf solchen Geräten, z.B. auf einem Smartphone oder auf einem Wearable Computer (wie etwa dem von der Firma Google vertriebenen Produkt "Google Glass"), ermöglichen. Das Verfahren soll vorzugsweise ohne Netzwerkverbindung und ohne Verwendung externer Rechnerressourcen auskommen. Insbesondere soll das Verfahren zum optischen Auslesen und Erkennen der auf dem Display eines Blutzuckermessgeräts (häufig eine 7-Segmentanzeige oder ein LCD-Display, wobei 7-Segmentanzeigen wegen der deutlich günstigeren Herstellung und des wesentlich geringeren Stromverbrauchs gegenüber LCD-Displays bevorzugt werden) angezeigten Messwerte geeignet sein.

Zur Lösung dieser Aufgabe ist erfindungsgemäß das in Anspruch 1 definierte Verfahren vorgesehen.

In entsprechender Weise sieht die Erfindung das in Anspruch 9 definierte mobile Endgerät vor.

Die Erfindung beruht auf der Erkenntnis, dass die Zuverlässigkeit der Zeichenerkennung bei der optischen Erkennung von auf einem Display angezeigten Zeichen dadurch erheblich gesteigert werden kann, dass die Zeichenerkennung nicht direkt anhand der gewonnenen Bilddaten, sondern anhand von speziell aufbereiteten Bilddaten durchgeführt wird, wobei die Aufbereitung die Position und Lage der Anzeigefläche in den gewonnenen Bilddaten berücksichtigt, welche aus einer vorangehenden automatischen Erkennung der Anzeigefläche des Displays in den gewonnenen Bilddaten ermittelt wird. Vereinfacht gesprochen geht der Zeichenerkennung eine allgemeine Displayerkennung voran. Sowohl die Erkennung des Displays bzw. der Anzeigefläche des Displays als auch die Aufbereitung der Bilddaten auf Basis der erkannten Anzeigefläche kann auf verschiedene Arten erfolgen bzw. kann verschiedene, teilweise alternative Verfahrensmerkmale aufweisen.

Zur Erkennung der Anzeigefläche wird zumindest ein in den Bilddaten repräsentierter Umriss, welcher einer Folge von Bildpunkten entspricht, erkannt. Es wurden im Stand der Technik bereits mehrere Verfahren zur Umrisserkennung bzw. entsprechende Algorithmen ("Border Tracing Algorithms") vorgeschlagen, welche dem Fachmann bekannt sind. Sobald sämtliche Umrisse erkannt sind, kann ein die Anzeigefläche begrenzender Umriss anhand der erwarteten Eigenschaften des Displays, z.B. Form, Symmetrie, Anzahl der Eckpunkte, Proportionen etc., erkannt werden. Sobald der Umriss der Anzeigefläche in den gewonnenen Bilddaten erkannt wurde, entspricht die Anzeigefläche im Wesentlichen dem vom diesem Umriss eingeschlossenen Ausschnitt der gewonnenen Bilddaten.

Während bei nur einem erkannten Umriss dieser eine Umriss als Grenze der Anzeigefläche angenommen werden kann, muss in der Praxis mit der Erkennung mehrerer Umrisse gerechnet werden, da beispielsweise abgesehen von dem Display selbst beispielsweise rechteckige Bedienknöpfe ebenfalls als Umriss erkannt werden. Um ausgehend von mehreren erkannten Umrissen die Anzeigefläche zu erkennen bzw. zu identifizieren, wird erfindungsgemäß bei mehreren erkannten Umrissen der Umriss mit der größten eingeschlossenen Fläche, dessen Anzahl von Bildpunkten der Anzahl der Eckpunkte des Displays entspricht, als Umriss der Anzeigefläche erkannt. Selbstverständlich können bei der Erkennung neben der Anzahl der Eckpunkte auch andere oder zusätzliche Merkmale verwendet werden, wie z.B. ein Seitenverhältnis des Displays. Die Anzahl der Eckpunkte, d.h. im Regelfall vier Eckpunkte, ermöglicht eine ausreichend gute Erkennung verschiedener Displayformate und ist zudem relativ effizient. Das Kriterium der größten eingeschlossenen Fläche hilft dabei zu verhindern, dass nützliche Teile der Bilddaten, welche einen Teil der Anzeigefläche repräsentieren, entfernt oder nicht weiter verarbeitet werden. Einer Erfassung von Umrissen mit einer größeren eingeschlossenen Fläche, welche mit dem Display verwechselt werden könnten, wird durch optische Fokussierung auf Objekte in einem Abstand von maximal 1 m entgegengewirkt.

Zur Aufbereitung der die Anzeigefläche repräsentierenden Bilddaten wird ein der erkannten Anzeigefläche entsprechender Ausschnitt aus den ursprünglich gewonnenen Bilddaten ausgewählt, d.h. es werden nur diese ausgewählten Bilddaten oder auf den ausgewählten Bilddaten basierend weiter aufbereitete Bilddaten der optischen Zeichenerkennung zugeführt. Die optische Zeichenerkennung kann dabei sämtliche Bilddaten außerhalb des besagten Ausschnitts ignorieren, was zu einer weiteren Beschleunigung des Verfahrens beiträgt.

Darüber hinaus wird die Aufbereitung optimal auf die lokalen Kontrastverhältnisse auf der Anzeigefläche abgestimmt, indem nach der Erkennung der Anzeigefläche und vor der optischen Zeichenerkennung nur die Bilddaten des ausgewählten Ausschnitts aufbereitet werden.

Um die Verarbeitung der Umrisse zu beschleunigen, ist es günstig, wenn die Umrisse durch Anwendung des Douglas-Peucker-Algorithmus vereinfacht werden. Eine solche Auswahl kann grundsätzlich durch ein beliebiges Kurvenglättungsverfahren getroffen werden, wobei der Grad der Vereinfachung vorab so festgelegt werden kann, dass die zur Erkennung des Displays verwendeten Eigenschaften dabei wenig oder nicht verfälscht werden. Der Douglas-Peucker-Algorithmus arbeitet vergleichsweise effizient und ermöglicht in wenigen Schritten eine starke Vereinfachung der erkannten Umrisse.

Ein vorteilhaftes Verfahren zur Erkennung eines in den Bilddaten repräsentierten Umrisses besteht darin, dass zumindest eine zusammenhängende Folge benachbarter Bildpunkte mit gleichem oder ähnlichem Farbwert als Umriss erkannt wird. Bei diesem Verfahren werden die Bilddaten zunächst auf einen noch keinem Umriss zugeordneten Bildpunkt durchsucht und dann ausgehend von diesem Bildpunkt die Farbwerte der benachbarten Bildpunkte der Reihe nach verglichen, bis ein Bildpunkt mit dem gleichen oder einem ähnlichen Farbwert angetroffen wird, und dann wird mit diesem Bildpunkt fortgesetzt, bis kein benachbarter Bildpunkt gefunden werden kann, der nicht bereits Teil des Umrisses ist.

Eine deutliche Verbesserung der Erkennungsrate der auf dem Display angezeigten Zeichen wird dadurch erzielt, dass zur Aufbereitung der die Anzeigefläche repräsentierenden Bilddaten eine perspektivische Verzerrung der erkannten Anzeigefläche in den ursprünglich gewonnenen Bilddaten oder dem Ausschnitt aus den ursprünglich gewonnenen Bilddaten korrigiert wird und/oder diese Bilddaten mit einem adaptiven Schwellwertverfahren vorverarbeitet werden. Eine solche Korrektur kann beispielsweise für eine rechteckige Anzeigefläche dadurch erfolgen, dass die Innenwinkel des im Allgemeinen einem Parallelogramm oder Trapez entsprechenden Umrisses der erkannten Anzeigefläche berechnet werden und daraus eine Transformationsmatrix für die Bilddaten ermittelt wird, mit welcher anschließend die Bilddaten entzerrt werden können. Für die Verarbeitung der Korrektur bzw. der Entzerrung ist es günstig, dass nur ein der Anzeigefläche entsprechender Ausschnitt der Bilddaten umgerechnet werden muss, um den mit der Korrektur verbundenen Rechenaufwand zu minimieren. Durch die alternative oder zusätzliche Vorverarbeitung mit einem adaptiven Schwellwertverfahren können die hier beschriebenen Erkennungsverfahren, d.h. die Umrisserkennung und die Zeichenerkennung bzw. die Segmenterkennung, vereinfacht und beschleunigt werden. Eine solche Vorverarbeitung hat den Vorteil, dass dadurch ideale Kontrastverhältnisse hergestellt werden können. Gegenüber bekannten Verfahren zur Ablese von Anzeigen ist die Anwendung eines Schwellwertverfahrens in Kombination mit der vorstehend beschriebenen Erkennung der Anzeigefläche besonders vorteilhaft, da - unabhängig von einer Umgebung des Displays - ein innerhalb der erkannten Anzeigefläche optimaler Schwellwert ermittelt werden kann. In der Folge kann, insbesondere bei digitalen Anzeigen, selbst bei ursprünglich minimalem Kontrastverhältnis, eine ideale Trennung des Vordergrunds vom Hintergrund bei keinem oder nur geringem Verlust von Bildinformation erzielt werden.

Das vorliegende Verfahren eignet sich insbesondere zum optischen Auslesen von 7-Segmentanzeigen, wobei in diesem Zusammenhang ein speziell auf solche Anzeigen zugeschnittenes Zeichenerkennungsverfahren vorgeschlagen wird. Das im Folgenden beschriebene Verfahren zur Erkennung von auf 7-Segmentanzeigen dargestellten Zeichen kann grundsätzlich auch unabhängig von den vorangehend beschriebenen Verfahrensschritten (Erkennung und Aufbereitung der Anzeigefläche) eingesetzt werden; es hat sich lediglich im Zusammenhang mit der dargestellten Vorverarbeitung als besonders zuverlässig herausgestellt.

Für segmentierte Anzeigen, insbesondere für 7-Segmentanzeigen, kann vorteilhaft zur optischen Zeichenerkennung ein Histogramm einer horizontalen Projektion der Farbwerte der aufbereiteten Bilddaten erstellt werden und aus dem Histogramm kann die Position zumindest einer Zeile von auf dem Display angezeigten Zeichen ermittelt werden. Dieser Methode liegt die Erkenntnis zugrunde, dass bei Segmentanzeigen am oberen und unteren Rand der Zeichen in der horizontalen Projektion eine erheblich höhere Dichte an Farbwerten zu beobachten ist. Dies ergibt sich aus der Anordnung der einzelnen Segmente, wobei am oberen und unteren Rand der Zeichen üblicherweise jeweils horizontale Segmente angeordnet sind, welche somit ein lokales Maximum in der horizontalen Projektion verursachen. Je nach Art der Segmentierung kann auch auf halber Zeichenhöhe ein weiteres horizontales Segment angeordnet sein, welches dann gleichermaßen ein lokales Maximum verursacht. Bei der Auswertung des Histogramms der horizontalen Projektion können die lokalen Maxima erkannt und anhand der Lage dieser Maxima die Positionen der Zeilen ermittelt werden.

Vergleichbar der horizontalen Projektion kann bei segmentierten Anzeigen, insbesondere bei 7-Segmentanzeigen, auch die Position der einzelnen Zeichen in den erkannten Zeilen ermittelt werden. Dabei wird vorzugsweise zur optischen Zeichenerkennung ein Histogramm einer vertikalen Projektion der Farbwerte eines der Zeile entsprechenden Ausschnitts der aufbereiteten Bilddaten erstellt und aus dem Histogramm die Anzahl und Position zumindest eines in der Zeile angezeigten Zeichens ermittelt. Die Erkennung der Zeichen basiert auf der Erkenntnis, dass die vertikalen Segmente - analog zur obigen Erklärung für die horizontalen Segmente - in der vertikalen Projektion lokale Maxima verursachen, die erkannt und zur Ermittlung der Zeichenpositionen verwendet werden können.

Wenn die Positionen der einzelnen Zeichen bekannt sind, kann das jeweils angezeigte Zeichen aus den Farbwerten eines dem Zeichen entsprechenden Ausschnitts der aufbereitete Bilddaten ermittelt werden, wobei vorzugsweise die Zustände einer Mehrzahl von ein Zeichen darstellenden Segmenten und aus diesen Zuständen ein dargestelltes Zeichen ermittelt werden. Dieses Verfahren bietet eine effiziente Alternative zu einem Vergleich der Bilddaten mit allen möglichen Zuständen der Segmentanzeige entsprechenden Vergleichsbildern. Stattdessen wird das Wissen um die Positionen der einzelnen Segmente innerhalb eines Zeichens genutzt, um für jedes Segment separat den in den Bilddaten repräsentierten Zustand zu ermitteln. Sobald die Zustände aller Segmente bekannt sind, kann das entsprechende Zeichen z.B. aus einer Tabelle aller möglichen Zustandskombinationen ermittelt werden, was effizienter ist als ein Vergleich der (wesentlich umfangreicheren) Bilddaten.

Unabhängig davon, ob es sich bei dem Display um eine Segmentanzeige handelt oder um ein Grafikdisplay, ist es vor allem bei freihändig durchgeführten Aufnahmen der Bilddaten vorteilhaft, wenn die Bilddaten ein Videosignal von aufeinander folgenden Einzelbildern umfassen, wobei nur solche Einzelbilder der Aufbereitung zugeführt werden, in denen eine Anzeigefläche des Displays erkannt wird. Solche Einzelbilder, in denen eine Anzeigefläche nicht erkannt wird, weil z.B. kein Umriss erkannt wird oder keiner der erkannten Umrisse den Eigenschaften des Displays entspricht, können vor der Zeichenerkennung und sogar vor der Aufbereitung verworfen werden, so dass die verfügbaren Ressourcen nicht mit einer überflüssigen Aufbereitung oder einer vermutlich aussichtslosen - und damit besonders aufwendigen - Zeichenerkennung unnötig belastet werden. Indem ein Videosignal verarbeitet wird, entsteht dem Benutzer durch dieses Überspringen von Einzelbildern kein zusätzlicher Bedienungsaufwand. Es wird lediglich die Dauer der Aufnahme geringfügig erhöht, was jedoch bei einigen wenigen verworfenen Einzelbildern nicht oder kaum wahrnehmbar ist.

Damit z.B. bei mehreren angezeigten Messwerten eine rasche und korrekte Zuordnung der erkannten Zeichen zu den entsprechenden Messwerten erfolgen kann, ist es günstig, wenn die von der optischen Zeichenerkennung erkannten Zeichen entsprechend einer vordefinierten Anordnung der angezeigten Zeichen gruppiert werden. Eine solche vordefinierte Anordnung kann beispielsweise anhand einer Eingabe des Gerätetyps durch den Benutzer ermittelt werden.

Weiters ist es vorteilhaft, wenn vor dem Ablegen der erkannten Zeichen im Speicher eine semantische Überprüfung dieser Zeichen oder von Zeichengruppen durchgeführt wird und die Zeichen nur dann abgelegt werden, wenn die semantische Überprüfung erfolgreich ist. Eine semantische Überprüfung kann beispielsweise einen erkannten Messwert auf Plausibilität prüfen oder mit früher erkannten Messwerten vergleichen, und die Änderung auf Plausibilität prüfen. Bei bestimmten Formaten der erkannten Zeichen, wie beispielsweise einem Datumsformat, kann zudem die Validität des erkannten Werts überprüft werden.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. In den Zeichnungen zeigen dabei im Einzelnen:

Fig. 1 eine Anwendungssituation für ein Verfahren zur optischen Erkennung von auf einem Display angezeigten Zeichen;
Fig. 2 ein schematisches Blockschaltbild eines mobilen Endgeräts und eines Messgeräts gemäß Fig. 1;
Fig. 3 ein allgemeines Flussdiagramm eines Verfahrens zur optischen Erkennung von auf einem Display angezeigten Zeichen;
Fig. 4 mehr im Detail einen Verfahrensabschnitt zum Laden und Umrechnen von gewonnenen Bilddaten gemäß Ziffer IV in Fig. 3;
Fig. 5 ein Flussdiagramm einer Subroutine zum Umrechnen von Bilddaten in eine Schwarz-Weiß-Kopie gemäß Fig. 4;
Fig. 6 einen Verfahrensabschnitt zum Erkennen von Umrissen in einem Schwarz-Weiß Bild gemäß Ziffer VI in Fig. 3;
Fig. 7 einen Verfahrensabschnitt zum Auswählen eines Umrisses gemäß Ziffer VII in Fig. 3;
Fig. 8 ein Flussdiagramm einer Subroutine zum Vereinfachen eines Umrisses gemäß Fig. 7;
Fig. 9 einen Verfahrensabschnitt zum Aufbereiten von einer erkannten Anzeige entsprechenden Bilddaten gemäß Ziffer IX in Fig. 3;
Fig. 10 einen Verfahrensabschnitt zur Identifikation von Zeilen und Zeichen in den aufbereiteten Bilddaten gemäß Ziffer X in Fig. 3; und

Fig. 11 einen Verfahrensabschnitt zur Erkennung eines identifizierten Zeichens gemäß Ziffer XI in Fig. 3.

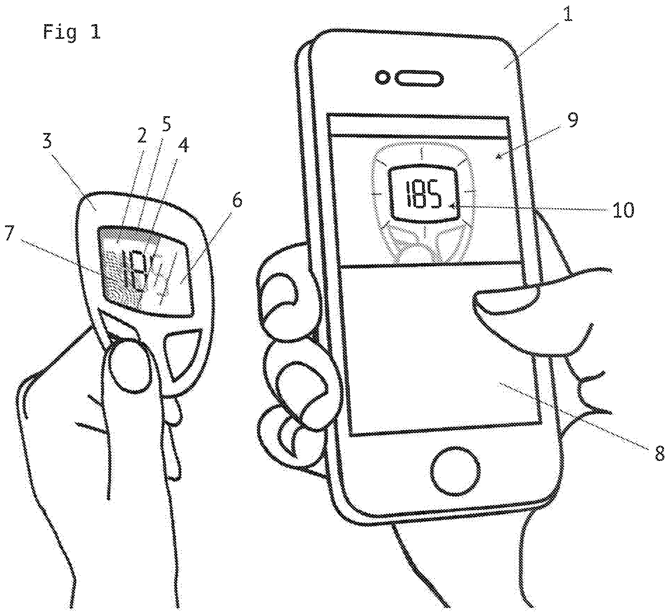

Fig. 1 stellt eine Anwendungssituation dar, bei der ein Benutzer ein mobiles Endgerät 1 verwendet, um einen auf einem Display 2 eines Messgeräts 3, z.B. eines Blutzuckermessgeräts, angezeigten Messwert zu erkennen und auf das mobile Endgerät 1 zu übertragen. Dabei wird ein Bildsensor (nicht gezeigt) des mobilen Endgeräts 1 auf das Display 2 des Blutzuckermessgeräts 3 gerichtet. Das mobile Endgerät 1 ist eingerichtet, ein Verfahren zur optischen Erkennung von auf dem Display 2 angezeigten Zeichen 4 auszuführen. Die Erkennung funktioniert dabei trotz diverser Problemzonen auf dem Display 2, wie z.B. Schatten 5 des Displayrahmens, Spiegelungen 6 oder Fingerabdrücken 7 bzw. anderer Verschmutzungen. Das mobile Endgerät 1 weist seinerseits ebenfalls ein Display 8 auf, auf welchem die mittels des Bildsensors gewonnenen Bilddaten 9, welche eine Repräsentation des Displays 2 enthalten, angezeigt werden. Insbesondere wird ein Ausschnitt 10 der Bilddaten 9, welcher eine erkannte Anzeigefläche des Displays 2 repräsentiert, auf dem Display 8 des mobilen Endgeräts 1, z.B. farblich, hervorgehoben. Auf diese Weise signalisiert das mobile Endgerät 1 dem Benutzer die erfolgreiche Erkennung der Anzeigefläche des Displays 2 des Messgeräts 3.

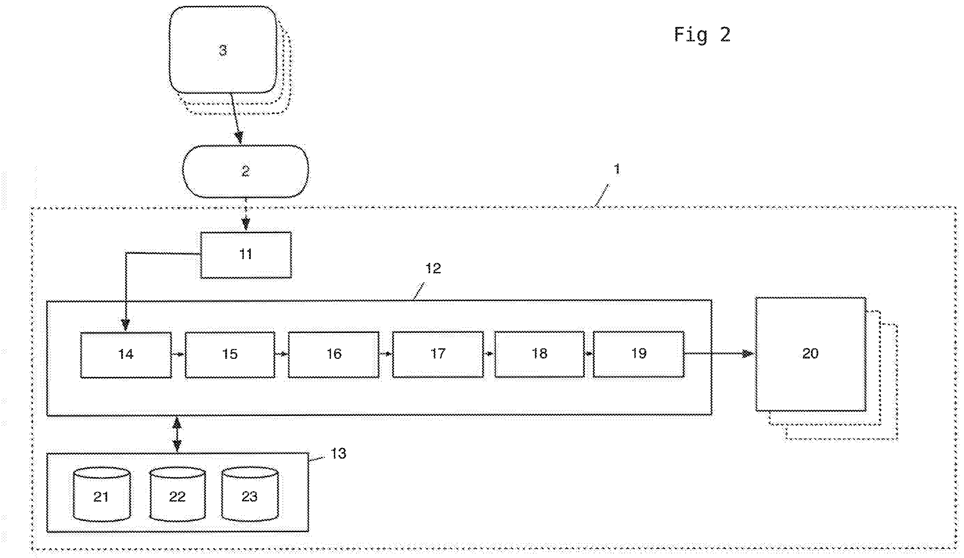

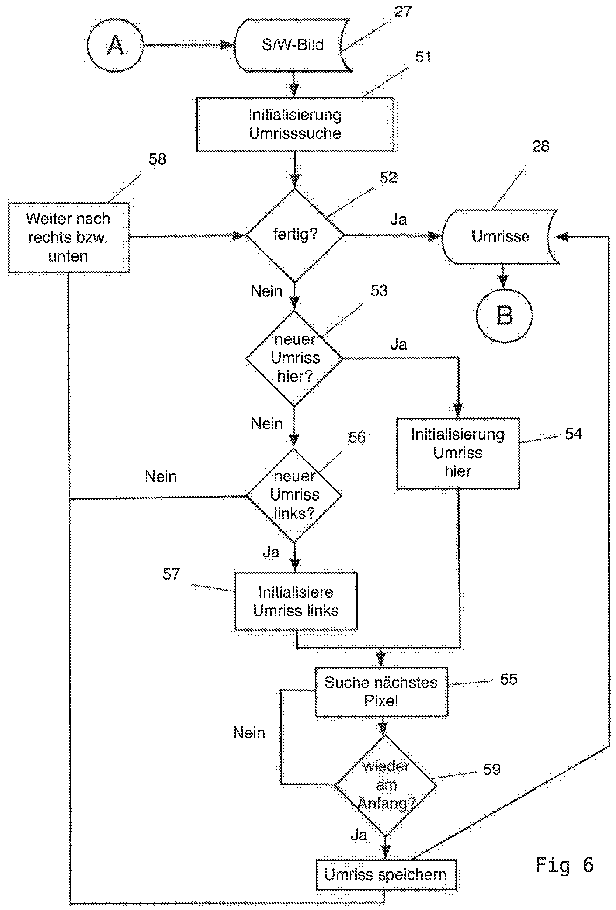

In Fig. 2 ist ein schematisches Blockschaltbild des mobilen Endgeräts 1 sowie des Messgeräts 3 mit dem Display 2 gezeigt. Das mobile Endgerät 1 weist einen Bildsensor 11, einen Prozessor 12 und einen Speicher 13 auf. Der Prozessor 12 ist zur Ausführung von Verarbeitungsmodulen 14-19 eingerichtet und sowohl mit dem Bildsensor 11 als auch mit dem Speicher 13 verbunden. Die Verarbeitungsmodule 14-19 umfassen ein Kantenerkennungsmodul 14, ein Displayextraktormodul 15, ein Zeilenidentifikationsmodul 16, ein Zeichenidentifikationsmodul 17, ein Zeichenerkennungsmodul 18 und ein Vergleichsmodul 19. Das Kantenerkennungsmodul 14 ist mit dem Bildsensor 11 verbunden und eingerichtet, den Bildsensor 11 zur Aufnahme und Übertragung von Bilddaten anzuweisen und etwaige in den so gewonnenen Bilddaten repräsentierte Kanten zu erkennen (vgl. Fig. 6). Das Displayextraktormodul 15 ist eingerichtet, die vom Kantenerkennungsmodul 14 erkannten Kanten und Umrisse zu verarbeiten und daraus die Kanten bzw. den Umriss einer in den Bilddaten repräsentierten Anzeigefläche zu erkennen sowie die die erkannte Anzeigefläche repräsentierenden Bilddaten zu extrahieren. Außerdem ist das Displayextraktormodul 15 geeignet, die extrahierten Bilddaten aufzubereiten, indem beispielsweise Verzerrungen korrigiert und Farbwerte normalisiert werden. Das mit dem Displayextraktormodul 15 verbundene Zeilenidentifikationsmodul 16 ist zur Verarbeitung der aufbereiteten Bilddaten eingerichtet, wobei etwaige in den aufbereiteten Bilddaten repräsentierte Zeilen einer Textanzeige identifiziert werden. Im Anschluss daran kann das Zeichenidentifikationsmodul 17 die einzelnen Zeichen der vom Zeilenidentifikationsmodul 16 ermittelten Zeilen identifizieren, wobei das Zeichenidentifikationsmodul 17 die jeweils einem Zeichen entsprechenden Ausschnitte der aufbereiteten Bilddaten ermittelt. Anhand dieser Ausschnitte werden im Zeichenerkennungsmodul 18 die Bedeutungen der einzelnen Zeichen erkannt, und es wird so der Inhalt des Displays 2 bzw. der auf dem Display 2 angezeigte Anzeigetext ermittelt. Schließlich ist das Vergleichsmodul 19 eingerichtet, mehrere zeitlich hintereinander erkannte Anzeigetexte zu vergleichen und zu überprüfen, wobei beispielsweise eine Anzahl von drei oder mehr in kurzen Zeitabständen erkannten Anzeigetexten verglichen werden können und bei Übereinstimmung eine korrekte Erkennung des Displayinhalts angenommen wird. Außerdem können im Vergleichsprozessor 19 auch semantische Überprüfungen z.B. hinsichtlich eines möglichen Wertebereichs von Messwerten oder hinsichtlich einer chronologischen Reihenfolge von erkannten Datumsangaben vorgenommen werden. Der erkannte und überprüfte Anzeigetext wird anschließend an ein oder mehrere weitere Anwendungsmodule 20, welche beispielsweise eine Aufzeichnung und Verwaltung der erkannten Daten sowie eine Aufbereitung zur Auswertung durch den Benutzer umfassen, übergeben.

Die auf dem Prozessor 12 ausgeführten Verarbeitungsmodule 14-19 greifen zur Ausführung ihrer Funktion auf den Speicher 13 bzw. darin abgelegte Datenbanken 21-23 zu. Insbesondere sind im Speicher 13 allgemeine Konfigurationsparameter 21 für die Verarbeitungsmodule 14-19 sowie ein Messgerätespeicher 22, welcher spezifische Konfigurationsparameter für einen oder mehrere Messgerätetypen, z.B. ein Seitenverhältnis des Displays 2 des jeweiligen Messgeräts 3 oder Angaben über die semantische Bedeutung einer oder mehrere Anzeigezeilen, umfasst. Außerdem können die bereits erkannten Anzeigetexte zur Überprüfung oder zur weiteren Übertragung im Wertespeicher 23 zwischengespeichert werden.

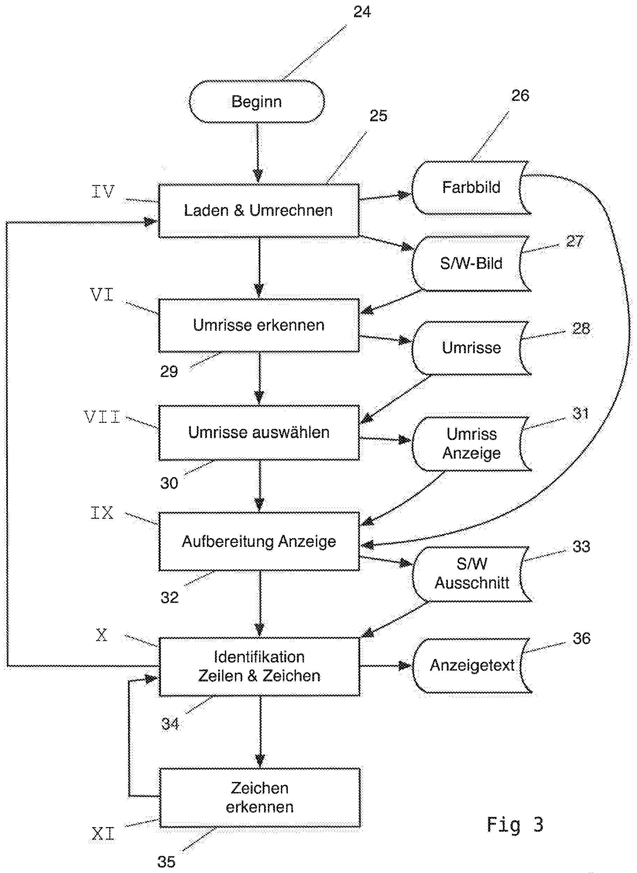

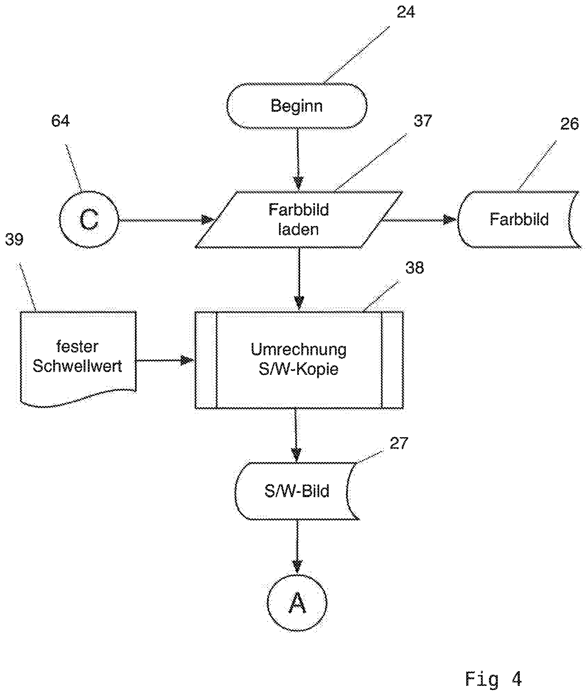

Das vorliegende Verfahren zur optischen Erkennung eines Displayinhalts wird im Folgenden überblicksmäßig anhand des in Fig. 3 gezeigten Flussdiagramms, sowie darauf im Detail anhand der in Fig. 4-11 gezeigten genaueren Flussdiagramme, welche die in Fig. 3 gezeigten Vorgänge detaillierter darstellen, erläutert. Ein Start (Beginn 24) der Ausführung des vorliegenden Verfahrens kann z.B. vom Benutzer durch Interaktion mit einem mobilen Endgerät 1 ausgelöst werden. Als erster Schritt 25 des Verfahrens werden zunächst Bilddaten eines Farbbilds 26 gewonnen bzw. von einem Bildsensor 11 geladen und in ein Schwarz-Weiß-Bild 27 umgerechnet. Anhand des Schwarz-Weiß-Bilds 27 werden anschließend in den Bilddaten repräsentierte Umrisse 28 im Rahmen einer Umrisserkennung 29 erkannt. In einem darauffolgenden Auswahlschritt 30 wird einer der Umrisse 28 als Anzeigeumriss 31 ausgewählt und somit eine Anzeigefläche des Displays in den gewonnenen Bilddaten erkannt. Sobald der Anzeigeumriss 31 bekannt ist, werden die dem Anzeigeumriss 31 entsprechenden Bilddaten des Farbbilds 26, welche somit die erkannte Anzeigefläche repräsentieren, in einem Aufbereitungsschritt 32 aufbereitet und in einen Schwarz-Weiß-Ausschnitt 33 umgerechnet. Die anschließende Identifikation 34 der in dem Schwarz-Weiß-Ausschnitt 33 abgebildeten Zeilen und der den Zeilen jeweils zugeordneten Zeichen arbeitet mit einer Zeichenerkennung 35 zusammen, um einen in dem Schwarz-Weiß-Ausschnitt 33 dargestellten Anzeigetext 36 zu erkennen bzw. aus den Bilddaten zu rekonstruieren. Das gesamte Verfahren wird anschließend, vorzugsweise zumindest zweimal oder dreimal, wiederholt, um einen Vergleich mehrerer, in kurzen zeitlichen Abständen (innerhalb von höchstens wenigen Sekunden) erkannter Anzeigetexte 36 und somit die Erkennung etwaiger fehlerhaft erkannter Anzeigetexte 36 zu ermöglichen.

Die einzelnen Verfahrensschritte 25, 29, 30, 32, 34, 35 werden nachfolgend in den jeweils durch römische Ziffern in Fig. 3 angegebenen Figuren 4, 6, 7, 9, 10 und 11 genauer dargestellt und beschrieben.

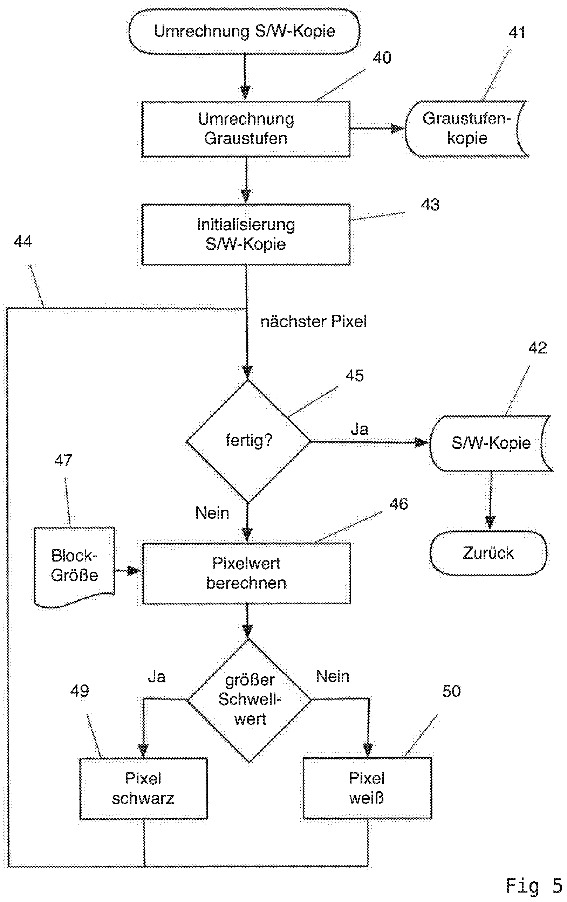

Gemäß Fig. 4 wird zum Beginn 24 des vorliegenden Verfahrens zunächst ein Ladevorgang 37 ausgeführt, welcher beispielsweise einen Bildsensor 11 aktiviert und ein vom Bildsensor 11 gemessenes bzw. aufgenommenes Farbbild 26 zur weiteren Verarbeitung lädt. Aus dem Farbbild 26 wird anschließend in einem Umrechnungsvorgang 38 (vgl. Fig. 5) ein dem Farbbild 26 entsprechendes Schwarz-Weiß-Bild 27 berechnet. Dem Umrechnungsvorgang 38 liegt dabei ein vorab festgelegter Schwellwert 39 zugrunde, welcher beispielsweise aus den Konfigurationsparametern 21 oder - falls der Typ des im Farbbild 26 abgebildeten Messgeräts 3 bekannt ist, z.B. weil dieser vorab vom Benutzer manuell eingegeben wurde - aus dem Messgerätespeicher 22 geladen wird. Nach der abgeschlossenen Umrechnung der Bilddaten des Farbbilds 26 in das Schwarz-Weiß-Bild 27 wird das Verfahren im Anschlusspunkt A (vgl. Fig. 6) fortgesetzt.

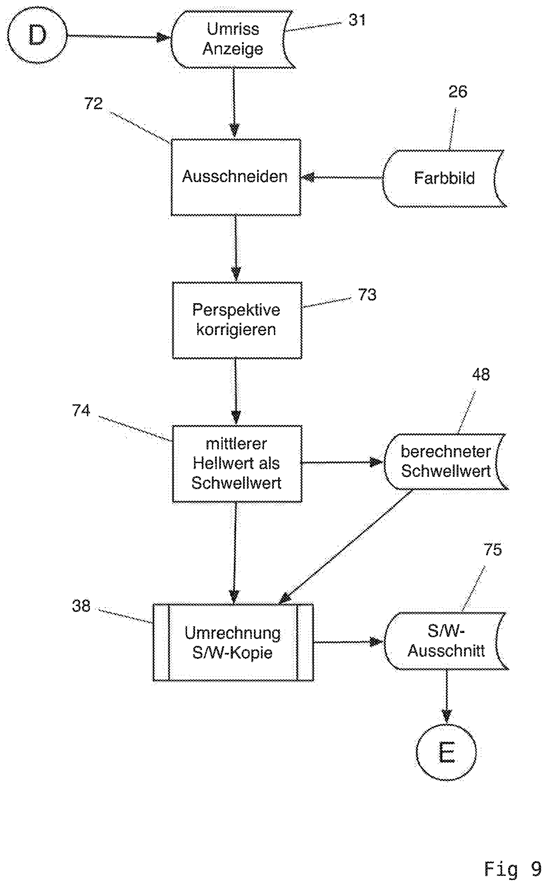

In Fig. 5 ist der Umrechnungsvorgang 38 genauer dargestellt. Dabei wird aus den erhaltenen Bilddaten, welche z.B. dem Farbbild 26 oder einem Ausschnitt daraus entsprechen, im Rahmen einer Graustufenumrechnung 40 zunächst eine Graustufenkopie 41 berechnet. Die Graustufenumrechnung 40 erfolgt dabei in an sich bekannter Weise, z.B. durch vollständige Entsättigung der Farbdaten bzw. durch Umrechnung der einzelnen Farbpixel der Bilddaten auf einen entsprechenden Hellwert (auch Dunkelstufe genannt). Zur Berechnung einer der Graustufenkopie 41 entsprechenden Schwarz-Weiß-Kopie 42 wird die Schwarz-Weiß-Kopie 42 zunächst als leeres bzw. weißes Bild mit den selben Dimensionen wie die Graustufenkopie 41 in einem Initialisierungsschritt 43 initialisiert. Anschließend werden in einer Schleife 44 die einzelnen Pixel der Schwarz-Weiß-Kopie 42 berechnet, bis gemäß der Abbruchbedingung 45 sämtliche Pixel durchlaufen wurden. Dabei wird auf Basis der Koordinaten des im aktuellen Schleifendurchlauf zu berechnenden Pixels zunächst in einem Berechnungsschritt 46 ein durchschnittlicher Pixelwert der das aktuelle Pixel umgebenden Pixel der Graustufenkopie 41 entsprechend einer aus den Konfigurationsparametern 21 geladenen Blockgröße 47 berechnet. Der so erhaltene durchschnittliche Pixelwert wird mit einem der Umrechnung übergebenen Schwellwert 39 (vgl. Fig. 4) oder 48 (vgl. Fig. 9) verglichen. Je nachdem, ob der berechnete durchschnittliche Pixelwert eines das aktuell zu berechnenden Pixel umgebenden Blocks oberhalb oder unterhalb des Schwellwerts liegt, erfolgt eine Zuweisung als schwarzes Pixel 49 oder weißes Pixel 50 in der Schwarz-Weiß-Kopie 42.

Ausgehend von dem umgerechneten Schwarz-Weiß-Bild 27 stellt Fig. 6 den Ablauf der Umrisserkennung 29 dar. Dabei wird zunächst im Rahmen einer Initialisierung 51 rund um die Bilddaten des Schwarz-Weiß-Bilds 27 ein ein Pixel breiter weißer Rand gelegt. Anschließend beginnt die Umrisssuche in einer Schleife ausgehend von einem Eckpunkt des so modifizierten Schwarz-Weiß-Bilds. Die Abbruchbedingung 52 der Schleife überprüft, ob das gerade ausgewählte Pixel außerhalb der Abmessungen des modifizierten Schwarz-Weiß-Bilds liegt und beendet in diesem Fall die Umrisssuche, indem die bisher erkannten und zwischengespeicherten Umrisse 28 weitergegeben werden (Ausgang B). Andernfalls, d.h. wenn das aktuelle Pixel innerhalb der Abmessungen des modifizierten Schwarz-Weiß Bilds liegt, wird eine Überprüfung 53 vorgenommen, um festzustellen, ob an der Stelle des aktuellen Pixels ein neuer, noch nicht erkannter Umriss beginnt. Diese Bedingung wäre im vorliegenden Fall dann erfüllt, wenn erstens dem aktuelle Pixel ein schwarzer Farbwert zugeordnet ist und zweitens dem links davon benachbarten Pixel ein weißer Farbwert zugeordnet ist und drittens das aktuelle Pixel nicht Teil eines bereits erkannten Umrisses ist. Falls alle drei Bedingungen erfüllt sind, wird ein neuer Umriss an der Stelle des aktuellen Pixels initialisiert, wobei die Initialisierung 54 das benachbarte weiße Pixel als Ausgangspunkt für die Suche 55 nach einem benachbarten schwarzen Pixel zwischenspeichert. Falls die obigen Bedingungen nicht erfüllt sind, wird in einem weiteren Überprüfungsschritt 56 festgestellt, ob ein neuer Umriss an dem links benachbarten Pixel beginnt. Dies ist dann der Fall, wenn dem aktuellen Pixel der Farbwert Weiß und dem links benachbarten Pixel der Wert Schwarz zugeordnet ist, und wenn das links benachbarte Pixel nicht Teil eines bereits erkannten Umrisses ist. Falls diese drei Bedingungen erfüllt sind erfolgt eine Initialisierung 57 eines neuen Umrisses ausgehen von dem links des aktuellen Pixels benachbarten Pixels, wobei das aktuelle Pixel als Ausgangspunkt für die nachfolgende Suche 55 zwischengespeichert wird. Wenn keine der Überprüfungen 53, 56 einen neuen Umriss feststellen konnte, wird als nächstes das rechts des aktuellen Pixels benachbarte Pixel oder - falls das aktuelle Pixel bereits am rechten Rand des modifizierten Schwarz-Weiß Bilds angeordnet ist - das linke Pixel der darunter benachbarten Zeile in einem Auswahlschritt 58 festgestellt und ausgewählt und im nächsten Schleifendurchlauf als aktuelles Pixel verarbeitet. Wenn ein neuer Umriss erkannt wurde, wird während der Suche 55 ausgehend von einem jeweils während der Initialisierung 54 bzw. 57 festgelegten Ausgangspunkt im Uhrzeigersinn das erste benachbarte Pixel des Umrissstartpunkts ermittelt und als Fortsetzungspunkt ausgewählt. Anschließend erfolgt ein Vergleich 59 des Fortsetzungspunkts mit dem Umrissstartpunkt, um festzustellen, ob bereits der gesamte Umriss rekonstruiert wurde. Andernfalls wird die Suche 55 vom Fortsetzungspunkt fortgesetzt, wobei in diesem Fall gegen den Uhrzeigersinn nach dem nächsten Fortsetzungspunkt gesucht wird.

Sobald der Umriss vollständig rekonstruiert wurde, wird dieser gespeichert bzw. den bisher erkannten Umrissen 28 hinzugefügt. In weiterer Folge wird die Umrisserkennung mit dem Auswahlvorgang 58 des nächsten Pixels des modifizierten Schwarz-Weiß-Bilds fortgesetzt, bis alle Pixel durchlaufen und somit sämtliche in den Bilddaten des Schwarz-Weiß Bilds 27 repräsentierten Umrisse 28 erkannt wurden.

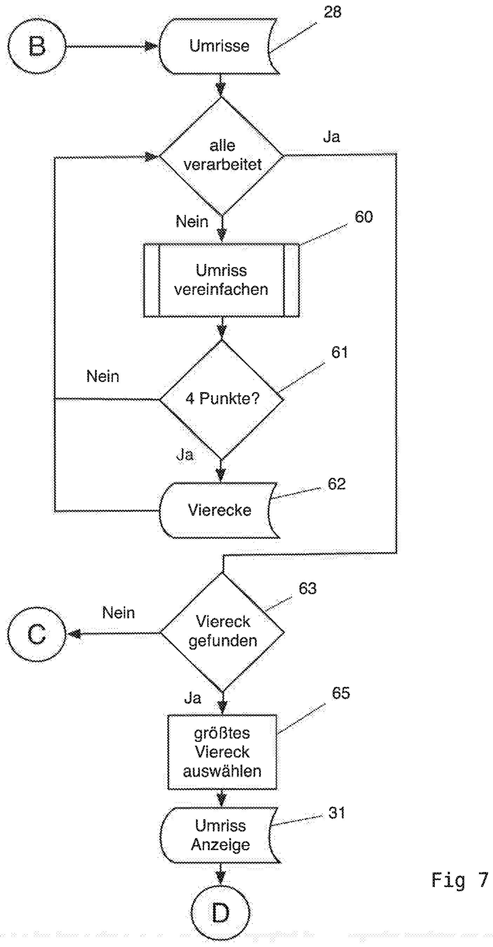

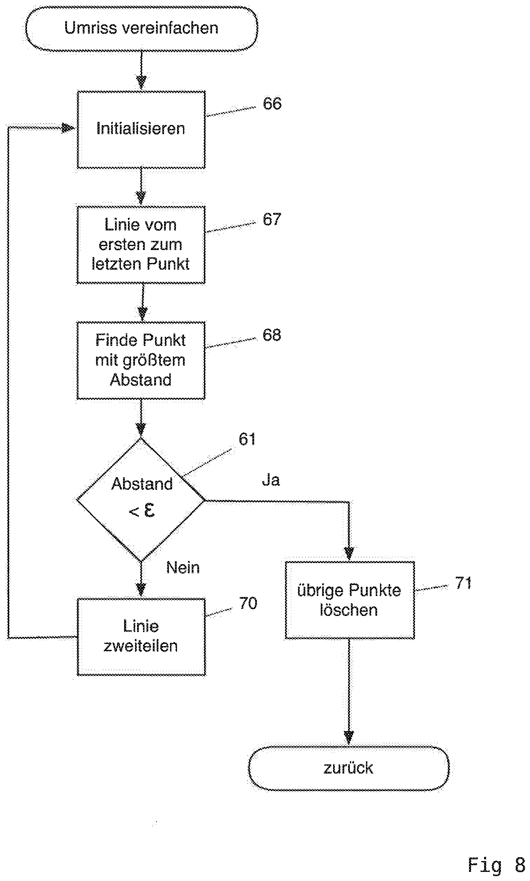

Ausgehend von den erkannten Umrissen 28 wird im Rahmen der Umrissauswahl 30 (vgl. Fig. 3), welche in Fig. 7 genauer dargestellt ist, ein Anzeigeumriss 31, d.h. jener Umriss, von dem angenommen wird, dass er die in den Bilddaten des Farbbilds 26 enthaltene Repräsentation der Anzeigefläche des Displays 2 begrenzt, ausgewählt. Zur Umrissauswahl 30 wird zunächst jeder einzelne Umriss einer Umrissvereinfachung 60 (vgl. Fig. 8) unterzogen. Anhand der Anzahl der nach der Vereinfachung 60 den Umriss bildenden Eckpunkte wird überprüft, s. Feld 61, ob der vereinfachte Umriss einem Viereck entspricht, und die Vierecke, vgl. Feld 62, d.h. alle vereinfachten Umrisse mit vier Eckpunkten, werden zwischengespeichert. Nachdem alle Umrisse 28 auf diese Weise verarbeitet wurden, wird festgestellt, Feld 63, ob zumindest ein Viereck 62 erkannt wurde, und andernfalls wird das Verfahren gemäß Anschlusspunkt C (vgl. Fig. 4) ausgehend vom Ladevorgang 37 neu gestartet. Falls zumindest ein Viereck 62 gefunden wurde, werden in einem Vergleichsschritt 65 die Flächeninhalte aller Vierecke 62 berechnet und jenes Viereck mit dem größten Flächeninhalt als Anzeigeumriss 31 erkannt.

Die Umrissvereinfachung 60 erfolgt im Wesentlichen nach dem an sich bekannten Ramer-Douglas-Peucker-Algorithmus, welcher in Fig. 8 schematisch dargestellt ist. Während der Initialisierung 66 wird zunächst ein Grenzwert $\varepsilon$ in Abhängigkeit von der Länge des zu vereinfachenden Umrisses festgelegt. Der Grenzwert $\varepsilon$ kann beispielsweise als 2 % der Gesamtlänge des jeweiligen Umrisses angenommen werden. Anschließend werden der erste und letzte Bildpunkt des Umrisses markiert, und der Abstand sämtlicher Bildpunkte des Umrisses von einer den ersten Punkt mit dem letzten Bildpunkt verbindenden Linie wird berechnet. Anhand der berechneten Abstände erfolgt eine Auswahl - s. Block 68 - jenes Bildpunkts des Umrisses, welcher den größten Abstand zu der so berechneten Linie aufweist. Falls dieser Abstand den Grenzwert $\varepsilon$ überschreitet, wird der Umriss an diesem Bildpunkt geteilt und das Verfahren rekursiv für jeden der beiden Teile, d.h. für einen Abschnitt des Umrisses vom ersten Bildpunkt zu dem Bildpunkt mit dem größten Abstand, und für einen zweiten Abschnitt von diesem Bildpunkt zum letzten Bildpunkt, rekursiv wiederholt. Sobald die Teilung 70 zu einer Anzahl von Abschnitten geführt hat, bei der jeder Bildpunkt innerhalb der einzelnen Abschnitte innerhalb des Grenzwerts $\varepsilon$ liegt, werden alle übrigen Bildpunkte des zu vereinfachenden Umrisses, d.h. all jene Bildpunkte, die nicht zumindest einen Abschnitt begrenzen, gelöscht, s. Block 71, wobei die verbleibenden Bildpunkte den vereinfachten Umriss bilden.

Im Anschluss an die Umrissauswahl 30 gemäß Fig. 7 erfolgt die Aufbereitung 32 der der Anzeigefläche des Displays 2 entsprechenden Bilddaten des Farbbilds 26 gemäß Fig. 9. Hierbei wird zunächst ein dem Anzeigeumriss 31 entsprechender Ausschnitt des Farbbilds 26 zur Weiterverarbeitung ausgewählt, s. Block 72, oder ausgeschnitten. In der anschließenden Perspektivenkorrektur gemäß Block 73 wird der so erhaltene Ausschnitt in ein Rechteck transformiert. Die Transformation erfolgt dabei durch Lösung des nachstehenden linearen Gleichungssystems (1) und Anwendung der daraus resultierenden Transformationskoeffizienten $c_{ij}$ auf den im Allgemeinen verzerrten Ausschnitt des Farbbilds 26:

$$\begin{vmatrix} x_0 & y_0 & 1 & 0 & 0 & 0 & -x_0 \cdot u_0 & -y_0 \cdot u_0 \\ x_1 & y_1 & 1 & 0 & 0 & 0 & -x_1 \cdot u_1 & -y_1 \cdot u_1 \\ x_2 & y_2 & 1 & 0 & 0 & 0 & -x_2 \cdot u_2 & -y_2 \cdot u_2 \\ x_3 & y_3 & 1 & 0 & 0 & 0 & -x_3 \cdot u_3 & -y_3 \cdot u_3 \\ 0 & 0 & 0 & x_0 & y_0 & 1 & -x_0 \cdot v_0 & -y_0 \cdot v_0 \\ 0 & 0 & 0 & x_1 & y_1 & 1 & -x_1 \cdot v_1 & -y_1 \cdot v_1 \\ 0 & 0 & 0 & x_2 & y_2 & 1 & -x_2 \cdot v_2 & -y_2 \cdot v_2 \\ 0 & 0 & 0 & x_3 & y_3 & 1 & -x_3 \cdot v_3 & -y_3 \cdot v_3 \end{vmatrix} \cdot \begin{vmatrix} c_{00} \\ c_{01} \\ c_{02} \\ c_{10} \\ c_{11} \\ c_{12} \\ c_{20} \\ c_{21} \end{vmatrix} = \begin{vmatrix} u_0 \\ u_1 \\ u_2 \\ u_3 \\ v_0 \\ v_1 \\ v_2 \\ v_3 \end{vmatrix} \qquad (1)$$

Dabei geben $x_i$ und $y_i$ die horizontalen bzw. vertikalen Koordinaten der vier Eckpunkte i=0,1,2,3 des verzerrten Ausschnitts an, und $u_i$ und $v_i$ sind die horizontalen bzw. vertikalen Koordinaten der vier Eckpunkte i=0,1,2,3 des entsprechend entzerrten Rechtecks, so dass durch Lösung des Gleichungssystems (1) die Werte der Transformationskoeffizienten $c_{ij}$ berechnet werden können.

Mit den Koeffizienten $c_{ij}$ kann anschließend der transformierte Ausschnitt Pixel für Pixel berechnet werden, wobei ein Farbwert p des Pixels an einer Stelle x, y des transformierten Ausschnitts wie folgt berechnet wird:

$$p(x,y)=q\left(\frac{c_{00}\cdot x + c_{01}\cdot y + c_{02}}{c_{20}\cdot x + c_{21}\cdot y + c_{22}}, \frac{c_{10}\cdot x + c_{11}\cdot y + c_{12}}{c_{20}\cdot x + c_{21}\cdot y + c_{22}}\right) \qquad (2)$$

wobei der Transformationskoeffizient $c_{22}$ konstant $c_{22}=1$ ist und q den Farbwert des Farbbilds 26 an der durch die beiden Parameter angegebenen Stelle angibt.

Auf Basis des transformierten und nunmehr rechteckigen Ausschnitts wird anschließend anhand der Farbinformationen der einzelnen Pixel ein mittlerer Hellwert des gesamten Ausschnitts berechnet, s. Block 74, und als berechneter Schwellwert 48 der anschließenden Umrechnung, Block 38, des rechteckigen Ausschnitts in einen Schwarz-Weiß-Ausschnitt, Feld 75, übergeben. Die Umrechnung 38 erfolgt dabei analog zu Fig. 4 gemäß dem in Fig. 5 dargestellten Verfahren, wobei anstelle des festen Schwellwerts 39 der berechnete Schwellwert 48 verwendet wird. Der Schwarz-Weiß-Ausschnitt 75 entspricht folglich einer rechteckigen Schwarz-Weiß Darstellung des Displays 2.

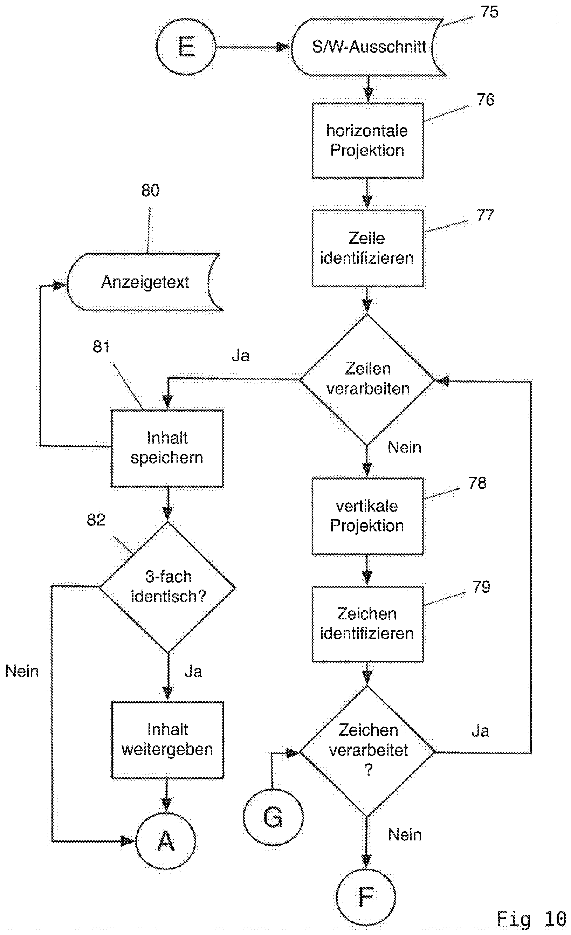

Ausgehend von dem Schwarz-Weiß-Ausschnitt 75 zeigt Fig. 10 die Identifikation 34 (vgl. Fig. 3) der Zeilen und der die Zeilen bildenden Zeichen des Displays 2. Hierfür wird zunächst gemäß Block 76 eine Berechnung eines horizontalen Projektionsprofils des Schwarz-Weiß-Ausschnitts 75 durchgeführt. Das horizontale Projektionsprofil entspricht im Wesentlichen einem Histogramm des Anteils an schwarzen Pixeln in jeder Pixelreihe des Schwarz-Weiß-Ausschnitts 75. Zur Identifikation, Block 77, der Zeilen wird die erste Ableitung des Histogramms berechnet, und es werden jeweils die Oberkanten bzw. Unterkanten jeder Zeile anhand der lokalen Maxima bzw. Minima im abgeleiteten horizontale Projektionsprofil ermittelt. Im Anschluss daran erfolgt für jede Zeile eine Identifikation der darin enthaltenen Zeichen nach einem ähnlichen Verfahren, wobei zunächst ein vertikales Projektionsprofil berechnet wird, Block 78, und anhand der ersten Ableitung des vertikalen Projektionsprofils bzw. deren lokalen Maxima und Minima die linke bzw. rechte Kante der einzelnen Zeichen identifiziert wird, Block 79. Wenn alle Zeilen verarbeitet wurden, wird der dem Inhalt des Displays 2 entsprechende Anzeigetext 80, z.B. Im Wertspeicher 23 (vgl. Fig. 2), für die Verwendung im Vergleichsmodul 19 abgelegt, Block 81. In einer folgenden Überprüfung, Feld 82, werden die zuletzt abgelegten Anzeigetexte 80 verglichen und bei zumindest drei übereinstimmenden Anzeigetexten 80 wird dieser Anzeigetext z.B. an weitere Anwendungsmodule 20 (vgl. Fig. 2) weitergegeben.

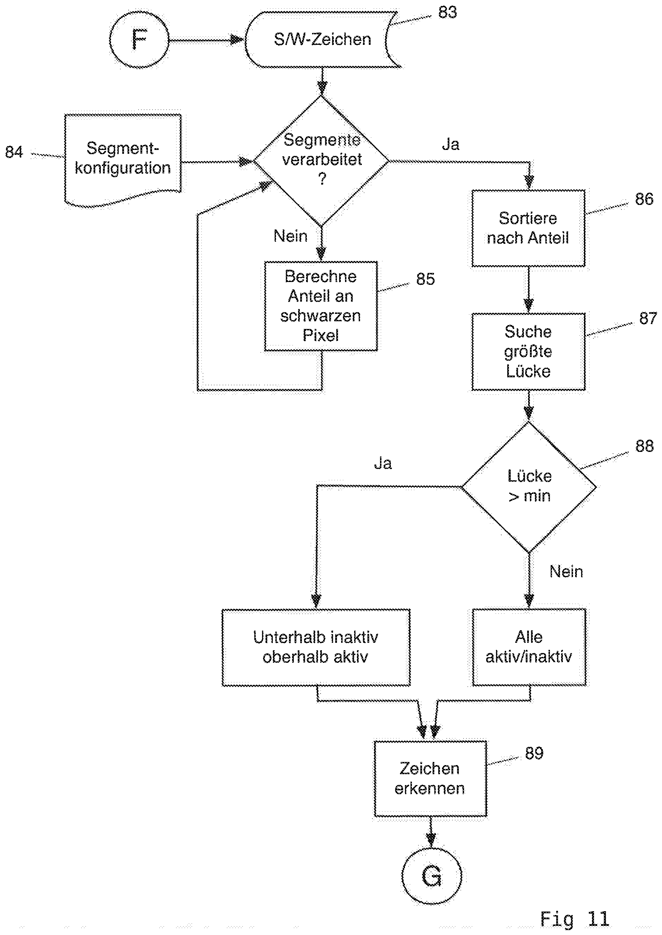

Die Erkennung der einzelnen identifizierten Zeichen, d.h. die Ermittlung der jeweils zugeordneten Bedeutung, ist in Fig. 11 genauer dargestellt. Ausgehend von einem in der Zeichenidentifikation 79 (vgl. Fig. 10) identifizierten Schwarz-Weiß Zeichen 83 im Schwarz-Weiß-Ausschnitt 75 wird zur Zeichenerkennung 35 (vgl. Fig. 3) eine vorgegebene Segmentkonfiguration, Block 84, verwendet. Die Segmentkonfiguration 84 kann z.B. aus einem Messgerätespeicher 22 (vgl. Fig. 2) geladen werden. Sie enthält etwa Angaben über Position und Ausdehnung der einzelnen Segmente innerhalb des Schwarz-Weiß-Zeichens 83. Anhand dieser Angaben wird zunächst eine Berechnung, Block 85, eines jedem Segment zugeordneten Anteils an schwarzen Pixel berechnet. Die so erhaltenen Anteile an schwarzen Pixel pro Segment des Schwarz-Weiß-Zeichens 83 werden sortiert, Block 86, und es wird eine Position der größten Lücke zwischen zwei benachbarten Anteilen gesucht, Block 87. Falls die Größe der Lücke d.h. der maximale Abstand zwischen zwei benachbarten Anteilen ein festgelegtes Minimum überschreitet, Feld 88, werden die den Anteilen oberhalb der Lücke zugeordneten Segmente als aktiv und die übrigen Segmente als inaktiv markiert. Andernfalls, d.h. wenn die Lücke das Minimum nicht überschreitet, wird allen Segmenten der gleiche Status zugewiesen, d.h. es werden entweder alle als aktiv (entsprechend der dargestellten Ziffer acht) oder alle als inaktiv (was praktisch als Ziffer null gewertet wird) erkannt. In diesem Fall wird ein vorgegebener Anteil an schwarzen Pixeln, welcher fix definiert oder konfigurierbar ist, z.B. aus dem Messgerätespeicher 22 geladen wird, als Referenzwert verwendet, um zu entscheiden, ob alle Segmente als aktiv oder inaktiv klassifiziert werden (je nachdem ob die erhaltenen Anteile größer oder kleiner als der Referenzwert sind). Auf Basis der so erhaltenen Aktivität der einzelnen Segmente kann eine Zeichenerkennung, Block 89, beispielsweise durch Nachschlagen der Aktivität in einer Segmenttabelle, welche jede Kombination von Aktivitäten eine Bedeutung in Form eines Buchstabens oder einer Zahl zuordnet, das Zeichen erkennen. Diese Zeichenerkennung wird - wie durch die Anschlusspunkte F und G in Fig. 11 und Fig. 10 angedeutet - für jedes Zeichen einer Zeile wiederholt, bis alle identifizierten Zeichen erkannt wurden.

**Patentansprüche**

1. Verfahren zur optischen Erkennung von auf einem Display (2) angezeigten Zeichen (4), wobei unter optischer Fokussierung auf Objekte in einem Abstand von maximal 1 Meter Bilddaten gewonnen werden, welche eine Repräsentation des Displays (2) enthalten, umfassend die folgenden Schritte:

   a) Erkennung (29, 30) einer Anzeigefläche des Displays (2) in den gewonnenen Bilddaten;
   b) Aufbereitung (32) der die erkannte Anzeigefläche repräsentierenden Bilddaten;

c) Durchführung einer optischen Zeichenerkennung (34, 35) anhand der aufbereiteten Bilddaten; und
d) Ablegen der bei der optischen Zeichenerkennung (34, 35) erkannten Zeichen in einem Speicher (13);
wobei zur Erkennung (29, 30) der Anzeigefläche zumindest ein in den Bilddaten repräsentierter Umriss (28), welcher einem durch eine Folge von Bildpunkten gegebenem Streckenzug entspricht, erkannt wird,
so dass bei mehreren erkannten Umrissen (28) der Umriss mit der größten eingeschlossenen Fläche, dessen Anzahl von Bildpunkten einer vorgegebenen Anzahl der Eckpunkte des Displays (2) entspricht, als Umriss (31) der Anzeigefläche erkannt wird,
dass zur Aufbereitung (32) der die Anzeigefläche repräsentierenden Bilddaten ein der erkannten Anzeigefläche entsprechender Ausschnitt aus den ursprünglich gewonnenen Bilddaten ausgewählt wird, und
dass nach der Erkennung der Anzeigefläche und vor der optischen Zeichenerkennung nur die Bilddaten des ausgewählten Ausschnitts aufbereitet werden, wobei die Aufbereitung (32) dieser Bilddaten umfasst, dass eine perspektivische Verzerrung der erkannten Anzeigefläche in dem Ausschnitt korrigiert wird und/oder diese Bilddaten mit einem adaptiven Schwellwertverfahren vorverarbeitet werden.

2. Verfahren nach Anspruch 1, **dadurch gekennzeichnet, dass** der zumindest eine in den Bilddaten repräsentierte und erkannte Umriss (28) durch Anwendung des Douglas-Peucker-Algorithmus vereinfacht wird.

3. Verfahren nach Anspruch 1 oder 2, **dadurch gekennzeichnet, dass** bei der Erkennung der Anzeigefläche zusätzlich zur erwarteten Anzahl der Eckpunkte ein Seitenverhältnis des Displays verwendet wird.

4. Verfahren nach einem der Ansprüche 1 bis 3, **dadurch gekennzeichnet, dass** zumindest eine zusammenhängende Folge benachbarter Bildpunkte mit gleichem oder ähnlichem Farbwert als Umriss (28) erkannt wird.

5. Verfahren nach einem der Ansprüche 1 bis 4, **dadurch gekennzeichnet, dass** zur optischen Zeichenerkennung (34, 35) ein Histogramm einer horizontalen Projektion der Farbwerte der aufbereiteten Bilddaten erstellt wird und aus dem Histogramm die Position zumindest einer Zeile von auf dem Display angezeigten Zeichen ermittelt wird.

6. Verfahren nach Anspruch 5, **dadurch gekennzeichnet, dass** zur optischen Zeichenerkennung (34, 35) ein Histogramm einer vertikalen Projektion der Farbwerte eines der Zeile entsprechenden Ausschnitts der aufbereiteten Bilddaten erstellt wird und aus dem Histogramm die Anzahl und Position zumindest eines in der Zeile angezeigten Zeichens ermittelt wird.

7. Verfahren nach Anspruch 6, **dadurch gekennzeichnet, dass** das angezeigte Zeichen aus den Farbwerten eines dem Zeichen entsprechenden Ausschnitts der aufbereitete Bilddaten ermittelt wird, wobei vorzugsweise die Zustände einer Mehrzahl von ein Zeichen darstellenden Segmenten und aus diesen Zuständen ein dargestelltes Zeichen ermittelt werden.

8. Verfahren nach einem der Ansprüche 1 bis 7, **dadurch gekennzeichnet, dass** die Bilddaten ein Videosignal von aufeinander folgenden Einzelbildern umfassen, wobei nur solche Einzelbilder der Aufbereitung zugeführt werden, in denen eine Anzeigefläche des Displays erkannt wird.

9. Mobiles Endgerät (1) mit einem Bildsensor zur Aufnahme der Bilddaten und mit einem Prozessor (12) und einem Speicher (13), eingerichtet zur Durchführung des Verfahrens nach einem der Ansprüche 1 bis 8 und zur Speicherung der auf dem Display (2) erkannten Zeichen.

**Claims**

1. Method for the optical recognition of characters (4) displayed on a display (2), wherein image data are obtained by optically focussing on objects at a maximum distance of 1 metre, which image data contain a representation of the display (2), said method comprising the following steps:

a) detecting (29, 30) a display area of the display (2) in the image data obtained;
b) processing (32) the image data representing the detected display area;
c) carrying out optical character recognition (34, 35) on the basis of the processed image data; and
d) storing the characters recognised in the optical character recognition (34, 35) in a memory (13);
wherein, for the detection (29, 30) of the display area, at least one contour (28) represented in the image data, which corresponds to a polygonal chain given by a sequence of image points, is detected such that, when there are a plurality of detected contours (28), the contour having the largest enclosed area of which the number of image points corresponds to a predetermined number of corner points of the display (2) is detected as the contour (31) of the display area,

wherein, for the processing (32) of the image data representing the display area, a section corresponding to the detected display area is selected from the originally obtained image data, and

wherein, after the display area has been detected and before the optical character recognition is carried out, only the image data of the selected section are processed, wherein the processing (32) of these image data includes a perspective distortion of the detected display area in the section being corrected and/or these image data being preprocessed using an adaptive threshold value method.

2. Method according to claim 1, **characterised in that** the at least one contour (28) represented and detected in the image data is simplified using the Douglas-Peucker algorithm.

3. Method according to either claim 1 or claim 2, **characterised in that**, when the display area is detected, an aspect ratio of the display is used in addition to the expected number of corner points.

4. Method according to any of claims 1 to 3, **characterised in that** at least one contiguous sequence of adjacent image points of the same or similar colour value is detected as the contour (28).

5. Method according to any of claims 1 to 4, **characterised in that**, for the optical character recognition (34, 35), a histogram of a horizontal projection of the colour values of the processed image data is created and the position of at least one line of characters displayed on the display is determined from the histogram.

6. Method according to claim 5, **characterised in that**, for the optical character recognition (34, 35), a histogram of a vertical projection of the colour values of a section of the processed image data corresponding to the line is created and the number and position of at least one character displayed in the line is determined from the histogram.

7. Method according to claim 6, **characterised in that** the displayed character is determined from the colour values of a section of the processed image data corresponding to the character, the states of a plurality of segments representing a character preferably being determined and a represented character preferably being determined from these states.

8. Method according to any of claims 1 to 7, **characterised in that** the image data comprise a video signal of successive individual images, only individual images in which a display area of the display is detected being supplied for the processing.

9. Mobile terminal (1) comprising an image sensor for capturing the image data and comprising a processor (12) and a memory (13), which terminal is designed to carry out the method according to any of claims 1 to 8 and to store the characters recognised on the display (2).

**Revendications**

1. Procédé de reconnaissance optique de signes (4) affichés sur un afficheur (2), dans lequel à la faveur d'une focalisation optique sur des objets à une distance maximale de 1 mètre sont obtenues des données d'image, lesquelles contiennent une représentation de l'afficheur (2), comprenant les étapes suivantes :

a) reconnaissance (29, 30) d'une surface d'affichage de l'afficheur (2) dans les données d'image obtenues ;
b) préparation (32) des données d'image représentant la surface d'affichage reconnue ;
c) réalisation d'une reconnaissance de signes (34, 35) optique à l'aide des données d'image préparées ; et
d) dépose des signes reconnus lors de la reconnaissance de signes (34, 35) optique dans une mémoire (13) ;
dans lequel, pour la reconnaissance (29, 30) de la surface d'affichage, est reconnu au moins un contour (28) représenté dans les données d'image, lequel correspond à un tracé d'itinéraire donné par une suite de points d'image, en ce que, dans le cas où plusieurs contours (28) sont reconnus, le contour avec la surface fermée la plus grande, dont le nombre de points d'image correspond à un nombre prédéfini des points clés de l'afficheur (2), la surface d'affichage est reconnue en tant que contours (31),
en ce que, pour la préparation (32) des données d'image représentant la surface d'affichage, une découpe correspondant à la surface d'affichage reconnue est sélectionnée parmi les données d'image initialement obtenues, et

en ce que, après la reconnaissance de la surface d'affichage et avant la reconnaissance de signes optique, seules sont préparées les données d'image de la découpe sélectionnée, dans lequel la préparation (32) de ces données d'image comprend le fait qu'une distorsion en perspective de la surface d'affichage reconnue est corrigée dans la découpe et/ou ces données d'image sont pré-travaillées avec une procédé à valeur-seuil adaptatif.

2. Procédé selon la revendication 1, **caractérisé en ce que** le au moins un contour (28) reconnu et représenté dans les données d'image est simplifié par l'utilisation de l'algorithme Douglas-Peucker.

3. Procédé selon la revendication 1 ou 2, **caractérisé en ce que**, lors de la reconnaissance de la surface d'affichage, un rapport largeur/hauteur de l'afficheur est utilisé en complément du nombre attendu des points clés.

4. Procédé selon l'une des revendication 1 à 3, **caractérisé en ce qu'**au moins une suite connexe de points d'image adjacents avec une valeur de couleur identique ou similaire est reconnue en tant que contour (28).

5. Procédé selon l'une des revendication 1 à 4, **caractérisé en ce que** pour la reconnaissance de signes (34, 35) optique est créé un histogramme d'une projection horizontale des valeurs de couleur des données d'image préparées et la position d'au moins une ligne de signes affichés sur l'afficheur est établie à partir de l'histogramme.

6. Procédé selon la revendication 5, **caractérisé en ce que** pour la reconnaissance de signes (34, 35) optique est créé un histogramme d'une projection verticale des valeurs de couleur d'une découpe correspondant à la ligne des données d'image préparées et le nombre et la position d'au moins un signe affiché dans la ligne est établie à partir de l'histogramme.

7. Procédé selon la revendication 6, **caractérisé en ce que** le signe affiché est établi à partir des valeurs de couleur d'une découpe correspondant au signe des données d'image préparées, dans lequel sont de préférence établis les conditions d'une pluralité de segments représentant un signe et à partir de ces conditions un signe représenté.

8. Procédé selon l'une des revendications 1 à 7, **caractérisé en ce que** les données d'image comprennent un signal vidéo d'images individuelles se succédant, dans lequel seules sont amenées à la préparation des images individuelles dans lesquelles une surface d'affichage de l'afficheur est reconnue.

9. Terminal (1) mobile avec un capteur d'image destiné à recevoir les données d'image et avec un processeur (12) et une mémoire (13), conçu pour réaliser le procédé selon l'une des revendications 1 à 8 et mémoriser les signes reconnus sur l'afficheur (2).

Fig 1

Fig 2

Fig 3

Fig 4

Fig 5

Fig 6

Fig 7

Umriss vereinfachen

Initialisieren — 66

Linie vom ersten zum letzten Punkt — 67

Finde Punkt mit größtem Abstand — 68

Abstand < ε — 61

Ja

Nein

Linie zweiteilen — 70

übrige Punkte löschen — 71

zurück

Fig 8

```
     ┌───┐           ┌──────────┐
     │ D │ ──────▶   │ Umriss   │ ──── 31
     └───┘           │ Anzeige  │
                     └──────────┘
                          │
                          ▼                           26
     72 ──       ┌──────────────┐        ┌──────────────┐
                 │              │ ◀────  │   Farbbild   │
                 │ Ausschneiden │        └──────────────┘
                 │              │
                 └──────────────┘
                          │
                          ▼
                 ┌──────────────┐ ──── 73
                 │  Perspektive │
                 │  korrigieren │
                 └──────────────┘
                          │                           48
                          ▼
     74 ──       ┌──────────────┐       ┌──────────────┐
                 │   mittlerer  │ ────▶ │  berechneter │
                 │  Hellwert als│       │  Schwellwert │
                 │  Schwellwert │       └──────────────┘
                 └──────────────┘
                          │
                          ▼                           75
     38 ──      ┌┤──────────────├┐      ┌──────────────┐
                ││ Umrechnung   ││ ───▶ │     S/W-     │
                ││ S/W-Kopie    ││      │  Ausschnitt  │
                └┤──────────────├┘      └──────────────┘
                                               │
                                               ▼
                                             ┌───┐
                                             │ E │
                                             └───┘
```

Fig 9

Fig 10

F → S/W-Zeichen ~ 83

84 ~ Segment-konfiguration

Segmente verarbeitet ?

Ja

Nein

Berechne Anteil an schwarzen Pixel ~ 85

Sortiere nach Anteil ~ 86

Suche größte Lücke ~ 87

Lücke > min ~ 88

Ja

Nein

Unterhalb inaktiv oberhalb aktiv

Alle aktiv/inaktiv

Zeichen erkennen ~ 89

G

Fig 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011000516 A1
- DE 102012110273 A1
- US 2014064559 A1

**In der Beschreibung aufgeführte Nicht-Patentliteratur**

- **XIAN LI et al.** LCD/LED DIGIT RECOGNITION BY IPHONE. *Masterarbeit,* 31. Mai 2011
- **JOAO PAOLO LIMA et al.** Real-Time Pattern Recognition using the Opentv Library. *Symposium on Virtual and Augmented Reality,* 01. Juni 2007, 1-42
- Automatic Recognition System for Numeric Characters on Ammeter Dial Plate. **YIBO LI et al.** YOUNG COMPUTER SCIENTISTS, 2008. ICYCS 2008. THE 9TH INTERNATIONAL CONFERENCE. IEEE, 18. November 2008, 913-918